# EUROPÄISCHE PATENTSCHRIFT

(11) **EP 1 554 545 B1**
(45) Veröffentlichungstag und Bekanntmachung des Hinweises auf die Patenterteilung: **09.03.2011**
(21) Anmeldenummer: 03753501.0
(22) Anmeldetag: 02.10.2003
(51) Int. Cl.: G01D 5/347

(54) **GESCHUTZTES LANGENMESSSYSTEM**
PROTECTED LENGTH MEASURING SYSTEM
SYSTEME DE MESURE DE LONGUEUR PROTEGE

(30) Priorität: 25.10.2002 DE 10249884
(43) Veröffentlichungstag der Anmeldung: 20.07.2005
(73) Patentinhaber: Dr. Johannes Heidenhain GmbH, 83301 Traunreut (DE)
(72) Erfinder: BÖGE, Ludwig, 07751 Jenapriessnitz/Wogau (DE); FREITAG, Hans-Joachim, 07749 Jena (DE); FRANZ, Heinz-Günther, 22359 Hamburg (DE); SCHMIDT, Andreas, 99089 Erfurt (DE)
(86) Internationale Anmeldenummer: PCT/EP2003/010987
(87) Internationale Veröffentlichungsnummer: WO 2004/038338

(56) Entgegenhaltungen:
- DE-A- 3 020 003
- DE-A- 3 527 652
- DE-A- 3 820 331
- DE-A- 10 204 097
- DE-A- 19 918 654
- DE-U- 29 521 403

## Beschreibung

Die Erfindung bezieht sich auf ein Längenmeßsystem gemäß dem Oberbegriff des Anspruches 1 sowie auf ein Verfahren gemäß Anspruch 9 zur Endmontage eines solchen Längenmeßsystems.

Längenmeßsysteme zum Messen vor Relativbewegungen zwischen einem ersten und einem zweiten Maschinenteil sind bekannt und werden bei Werkzeugmaschinen häufig eingesetzt, beispielsweise um die Bewegung eines Maschinenkopfes oder -schlittens gegenüber einem Maschinenbett zu erfassen. Oblicherweise wird dazu ein Maßstab verwendet, der am Maschinenbett befestigt wird. Ein Abtastkopf fühlt den Maßstab ab, wobei dies kontaktfrei ebenso wie kontaktierend erfolgen kann. Der höheren Meßgenauigkeit halber haben sich jedoch optische und damit kontaktfreie Abfühlprinzipien durchgesetzt. Die DE 19918 654 A1 beschreibt ein gattungsgemäßes Längenmeßsystem. Die DE 3 527 652 A1 beschreibt ein etwas anders vormontiertes magnetisches Längenmeßsystem.

Längenmeßsysteme der genannten Art können in zwei Kategorien unterteilt wurden: offene und gekapselte Meßsysteme. Bei offenen Meßsystemen ist der Maßstab offen am Maschinenbett befestigt und der am Maschinenkopf befestigte Abtastkopf bewegt sich über dem Maßstab. Bei gekapselten Meßsystemen liegt der Maßstab in einer geschlossenen Kapsel, in der sich auch der Abtastkopf befindet. Der Abtastkopf läuft dabei auf in der Kapsel liegenden Führungselementen und ist mit einem Mitnehmer mit dem Maschinenkopf verbunden, so daß er sich mit diesem bewegt. Ein gekapseltes Meßsystem ist beispielsweise in der DE 30 20 003 A1 dargestellt. Auch die DE 19 918 654 A1 widmet sich einem gekapselten System.

Gekapselte Meßsysteme erreichen einen höheren Verschmutzungsschutz des Maßstabs und des Abtastkopfes als offene Systeme, erkaufen sich dies jedoch mit einem hohen konstruktiven Aufwand. Gekapselte Meßsysteme sind dementsprechend teurer als offene.

Bei der Montage eines Längenmeßsystems an einer Maschine, beispielsweise einer Werkzeugmaschine, muß eine Anpassung an die jeweiligen Gegebenheiten erfolgen. Die Lagen der Montagestellen für den Maßstab sowie den Abtastkopf können nur innerhalb gewisser Toleranzen spezifiziert werden. Beispielsweise ist eine gewisse Toleranz bezüglich des Winkels gegeben, in dem die Montageflächen für Maßstab und Abtastkopf zueinander liegen. Gekapselte Meßsysteme sind hier im Vorteil, da der Abtastkopf aufgrund der Führung in der Kapsel nicht unmittelbar, sondern über einen relativ leicht modifizierbaren Mitnehmer mit dem Maschinenkopf verbunden ist. Dieser Mitnehmer muß möglichst wenig Spiel in der Meßrichtung aufweisen. In den anderen Richtungen, insbesondere entlang der Mitnehmerachse ist schon deshalb eine gewisse Flexibilität gegeben, da durch die Führung des Abtastkopfes in der Kapsel der Abstand zwischen dem Maschinenkopf und der Führung in der Kapsel entlang der zu erfassenden Meßstrecke etwas variieren kann.

Bei offenen Systemen, deren Abtastkopf in der Regel fest am Maschinenkopf angebracht ist, ist diese Flexibilität nicht gegeben, weshalb hier eine höhere Genauigkeit an die gegenseitige Lage der Montageflächen für Abtastkopf und Maßstab gefordert ist. Dies erschwert die Endmontage.

Der Erfindung liegt deshalb die Aufgabe zugrunde, ein Längenmeßsystem zu schaffen, bei dem ein verbesserter Schutz von Abtastkopf und Maßstab mit vermindertem technischen Aufwand erreicht wird.

Diese Aufgabe wird erfindungsgemäß durch ein Längenmeßsystem gemäß Anspruch 1 gelöst.

Die Aufgabe wird erfindungsgemäß im Sinne einer vereinfachten Montage weiter durch ein Verfahren gemäß Anspruch 9 gelöst.

Erfindungsgemäß wird also ein Profilteil eingesetzt, das nicht nur schützende Funktionen für den Maßstab hat, sondern auch den Abtastkopf, insbesondere im Bereich, in dem optische Elemente liegen, umgibt. Der Abtastkopf ist dabei fest am Maschinenteil angebracht, so daß er keinen Führungskontakt mit dem Profilteil benötigt. Das Profilteil kann also diesbezüglich einfacher ausgebildet werden und muß den Abtastkopf nicht führen. Dieser folgt lediglich der Bewegung des ersten Maschinenteils, an dem er fest angebracht ist.

Die Ausrichtung von Abtastkopf und Maßstab wird in montieren Zustand durch entsprechende Justage des Profilteils, das den Maßstab enthält, zum Abtastkopfes erreicht. Die vorgegebene Bewegung zwischen dem ersten Maschinenteil, das den Abtastkopf trägt, und dem den Maßstab tragenden Profilteil, das am zweiten Maschinenteil befestigt ist, sorgt im endmontierten Zustand automatisch für die korrekte Lage zwischen Abtastkopf und Maßstab, wie sie für eine genaue Messung erforderlich ist.

Vor der Endmontage wird dieser justierte Zustand durch ein entfernbares Montageelement gesichert, das den Abtastkopf mit dem Profilteil lösbar verbindet.

Die Befestigung des Profilteils am zweiten Maschinenteil erfolgt beim erfindungsgemäßen Längenmeßsystem zweckmäßigerweise dann, wenn Abtastkopf und Profilteil noch miteinander verbunden sind. Dabei kommen insbesondere form- oder stoffschlüssige Verbindungen in Frage, wobei eine stoffschlüssige Verbindung in Form einer Verklebung den Vorteil hat, daß sie auch von ungeschultem Personal bei der Befestigung des Längenmeßsystems an einer Maschine vorgenommen werden kann. Es ist deshalb bevorzugt, daß das Profilteil eine Klebefläche aufweist, an der es mit dem zweiten Maschinenteil verklebbar ist.

Das Profilteil schützt den Maßstab. Weiter hat es auch eine gewisse Schutzfunktion für den Abtastkopf. Diesbezüglich ist es bevorzugt, daß das Profilteil U-förmig mit zwei Schenkeln profiliert ist, wobei einer der Schenkel am zweiten Maschinenteil angebracht ist und an seiner Innenseite den Maßstab trägt und der andere der Schenkel den Abtastkopf während der Messung berührungslos umgreift.

Der den Maßstab kontaktlos umgreifende Abtastkopf steht in der Regel tief in das Profilteil ein, wodurch er besonders gut geschützt ist. Insbesondere die freiliegenden optischen Bauteile des Abtastkopfes liegen dann vorzugsweise im Profilteil. Dies mindert die Gefahr mechanischer Beschädigungen des Abtastkopfes. Zusätzlich ist die Verschmutzungsgefahr für den Maßstab stark herabgesetzt, da er sich im Inneren des U-förmigen Profilteils und in einem Meßspalt des Abtastkopfes befindet. Das Profilteil ist in dieser Ausführungsform in Art eines Kapelsprofils oder einer U-förmigen Schiene ausgebildet, in deren Inneren der Maßstab sitzt.

Bei dieser Ausführungsform kann darüberhinaus der Abtastkopf auf einfache Weise mit dem Profilteil verbunden werden, indem eine Verbindung zwischen den zwei Schenkeln des Profilteils und dem Abtastkopf eingerichtet wird. Dieses bewerkstelligende Montageelemente haben darüber hinaus den Vorteil, daß der im Inneren des Profilteils liegende Maßstab vom Montageelement, das den vorjustierten Zustand sichert, nicht beeinträchtigt werden kann.

Für das Montageelement kommt jede geeignete form- oder kraftschlüssige Befestigung in Frage, die eine starre Verbindung zwischen Abtastkopf und Profilteil im vorjustierten Zustand sicherstellt und die unter Beibehaltung des vorjustierten Zustandes lösbar ist. Ein besonders einfach und dennoch hochpräzise ausgebildetes Montageelement liegt in Form zweier im Querschnitt zylindrischer Abstandshalter vor, die von den Schenkeln des Profilteils in Nuten des Abtastkopfes gespannt sind. Diesbezüglich ist es zweckmäßig, das Profilteil mit einem federnden Abschnitt auszubilden, der für die entsprechende Spannkraft sorgt. Solche Abstandshalter können dann ohne Werkzeug auf einfach Weise durch Herausziehen zum Lösen der Verbindung zwischen Abtastkopf und Profilteil entnommen werden. Durch den Querschnitt der Abstandshalter und die vom Profilteil ausgeübte Spannkraft kann darüber hinaus die gewünschte Justierung zwischen Abtastkopf und Profilteil sehr präzise eingestellt werden.

Das Profilteil wird in einer vorzugsweisen Ausgestaltung direkt am zweiten Maschinenteil befestigt. Die Lage des Maßstabs im Profilteil ist somit ausschlaggebend für die Orientierung des Maßstabs zum zweiten Maschinenteil. Eine hochpräzise Ausrichtung des Maßstabs im Profilteil ist somit der Meßgenauigkeit förderlich. Diesbezüglich ist es deshalb bevorzugt, daß das Profilteil eine den Maßstab ausrichtende Referenzfläche aufweist, an welcher der Maßstab im befestigten Zustand anliegt. Eine besonders genaue Ausrichtung wird bei der Verwendung zweier Referenzflächen erreicht, die in einem Winkel zueinander (vorzugsweise 90°) liegen. Die Referenzflächen richten den Maßstab im Profilteil aus.

Da mitunter für den Maßstab und das Profilteil unterschiedliche Materialien verwendet werden, ist es vorteilhaft, thermische Spannungen zwischen Maßstab und Profilteil auszugleichen und gleichzeitig für eine sichere Anlage des Maßstabs an der ausrichtenden Referenzfläche zu sorgen. Dies kann besonders einfach durch eine Spannvorrichtung erreicht werden, die den Maßstab in Richtung auf die Referenzfläche verspannt. Als Spannvorrichtung kommt beispielsweise eine Federvorrichtung oder ein geeignetes elastisches Mittel, wie beispielsweise eine Gummischnur in Frage.

Der Abtastkopf ist durch das Einstehen in das Profilteil vor Verschmutzungen geschützt. Er fühlt den im Profilteil liegenden Maßstab kontaktlos ab. Für eine optische Abtastung, bei der Strahlung durch den Maßstab geleitet wird, ist es bevorzugt, daß der in das Profilteil einstehende Abtastkopf den dort befestigten Maßstab während der Messung dreiseitig und kontaktlos umgreift. Durch dieses dreiseitige Umgreifen ist nicht nur eine optische Transparenzmessung am Maßstab möglich, die für eine hohe Meßgenauigkeit bekannt ist, es ist auch zugleich ein noch weitergehender Verschmutzungsschutz für die optischen Elemente des Abtastkopfes gegeben, da diese dann an den Flanken eines Meßspaltes liegen, in den der Maßstab berührungslos einsteht. Ein Verschmutzen der optischen Baugruppen ist damit stark vermindert.

Das erfindungsgemäße Längenmeßsystem läßt sich besonders einfach montieren, indem zuerst das Profilteil am zweiten Maschinenteil ausgerichtet und befestigt wird und dann der Abtastkopf am zweiten Maschinenteil spaltfüllend befestigt wird. Die Ausrichtung des Profilteils sollte dabei so erfolgen, daß unter der Relativbewegung von erstem und zweitem Maschinenteil die vorbestimmte Justierung zwischen Abtastkopf und Maßstab beibehalten bleibt, wenn der Abtastkopf vom ersten Maschinenteil geführt wird.

Durch die vorgegebene Relativbewegung der beiden Maschinenteile und der festgelegten Justierpositionen von Profilteil und Abtastkopf ist eine Überbestimmung der Bauteile gegeben, die grundsätzlich in einem in der Regel keilförmig verlaufenden Spalt zwischen einer Montagefläche des Abtastkopfes und dem ersten Maschinenteil resultiert. Diese Überbestimmungsproblematik wird dadurch behoben, daß der Abtastkopf am ersten Maschinenteil spaltfüllend angebracht wird, beispielsweise durch eine Klebung oder durch entsprechend einstellbare Ausgleichstücke.

Die Ausrichtung des Profilteils entlang der Längsachse der Relativbewegung, d.h. in konstantem Abstand zum ersten Maschinenteil ist wesentlich dafür, daß der am ersten Maschinenteil zu befestigende Abtastkopf und der Maßstab immer die ideale, einen möglichst geringen Meßfehler bedingende Lange zueinander haben. Es ist deshalb zur Befestigung bevorzugt, daß das Profilteil zur Längsachse der Relativbewegung grob ausgerichtet wird und dann mittels einer Lehre entlang der Längsachse in konstantem Abstand zum ersten Maschinenteil justiert wird, wobei erstes und zweites Maschinenteil zur Einjustierung des konstanten Abstandes gegeneinander bewegt werden. Durch dieses Vorgehen ist sichergestellt, daß der Abtastkopf auch nach Befestigung am ersten Maschinenteil immer in vorbestimmter Lage zum Maßstab liegt.

Da der Abtastkopf am ersten Maschinenteil spaltfüllend befestigt wird, ist es zweckmäßig, mittels der Lehre einen vorbestimmten Spalt zwischen ersten Maschinenteil und Abtastkopf vor der Anbringung des Abtastkopfes am ersten Maschinenteil einzustellen. Die spaltfüllende Befestigung füllt dann diesen vorbestimmten Spalt sowie etwaige durch Toleranzen bedingte Abweichungen aus.

Als spaltfüllende Befestigung kommt dabei eine Klebung in Frage. Gleiches gilt für die Befestigung des Profilteils.

Vorteilhaft ist diesbezüglich ein Meßsystem mit einem als Abtastkopf ausgebildeten Bauteil, das mit einer Montagefläche unter Verwendung eines Klebstoffs an einem Maschinenteil befestigbar ist und das aufweist eine Montageplatte, die am Maschinenteil lösbar befestigbar ist und die mit der Montagefläche ein Klebvolumen begrenzt, in das der Klebstoff von oben einfüllbar ist, wobei das Klebvolumen unten und jeweils an den Seiten zwischen Bauteil und Montageplatte für den Klebstoff abgedichtet umgrenzt ist. Die Aufgabe wird weiter mit einem Verfahren zum Befestigen des Bauteils eines solchen Meßsystems am Maschinenteil gelöst, wobei das Bauteil in eine vorbestimmte Stellung am Maschinenteil justiert und dort fest angebracht wird, gelöst, indem daß nach Einjustieren in die vorbestimmte Stellung die Montageplatte fest am Maschinenteil angebracht und dann Klebstoff in das Klebvolumen eingefüllt wird, um das Bauteil fest mit der Montageplatte zu verbinden.

Dann wird also für das Meßsystem eine Montageplatte verwendet, die am Maschinenteil lösbar befestigbar ist und mit der Montagefläche des Bauteils, beispielsweise eines Abtastkopfes, verklebt wird. Die Toleranzanforderungen an die Montagefläche am Maschinenteil sind damit deutlich reduziert, eventuelle Abweichungen die beispielsweise einen keilförmigen Spalt an der Montagefläche des Abtastkopfes zur Folge haben könnten, werden durch die Klebung ausgeglichen. Das zwischen der Montageplatte und der Montagefläche gebildete Klebvolumen erlaubt eine spaltfüllende Befestigung des Bauteils am Maschinenteil, so daß die Befestigung des Bauteils keine negativen Auswirkungen auf dessen einjustierte Stellung hat; dies insbesondere, da die Befestigung spannungsfrei durch Auffüllen des Klebvolumens mit Klebstoff erfolgen kann.

Durch den Einsatz der Montageplatte am Meßsystem ist darüber hinaus eine definierte Materialpaarung zwischen Montageplatte einerseits und Montagefläche andererseits gewährleistet. Die Qualität der Verklebung wird dadurch gesteigert. Darüber hinaus ist eine größere Freiheit bei der Wahl des Klebstoffes gegeben, und das Klebvolumen kann hinsichtlich Gestaltung und Größe optimal für einen Klebstoff gestaltet werden.

Die Montageplatte ist lösbar am Maschinenteil befestigt. Es ist somit möglich, das Bauteil auch nach der Verklebung vom Maschinenteil zu lösen. Bei einer Klebung ohne Montageplatte wäre dies nicht möglich.

Als weiterer Vorteil muß keine Klebefläche am Maschinenteil vorbereitet werden, was insbesondere bei Werkzeugmaschinen oft schwierig ist, da Verschmutzungen durch Ölreste in der Regel unvermeidlich sind. Auch muß die Klebung nicht mehr von speziell geschulten Personal vorgenommen werden. Die Begrenzung des Klebevolumens verhindert, daß Klebstoff vor den Aushärten aus dem Spalt zwischen Montageplatte und Montagefläche herausläuft, was einerseits zu Verschmutzungen und andererseits zu einer nicht beherrschbaren Klebstoffmenge im Klebspalt führen würde. Zur Begrenzung ist jedes Mittel geeignet, das ein Herauslaufen des Klebstoffes verhindert. Der Begriff "abgedichtet" ist somit auf die Viskosität und die Fließeigenschaften des Klebstoffes bezogen zu verstehen. Die Dichtheit muß bezüglich des einzufüllenden Klebstoffes gewährleistet sein.

Eine besonders einfache Dichtung kann erreicht werden, wenn die Montageplatte oder die Montagefläche des Bauteils eine vorstehende Struktur aufweist, die zwischen der Montagefläche und der Montageplatte das Klebevolumen abdichtet.

In den meisten Fällen ist die Montagefläche des Bauteiles in etwa rechteckig. Für solche Fälle ist es zweckmäßig, daß die vorstehende Struktur, die die Dichtung erreicht, U-förmig verläuft. Dann kann an der Oberseite des "U" der Klebstoff eingefüllt werden.

Die abdichtende Umgrenzung des Klebevolumens muß auch bei Variationen des Spaltes zwischen Montageplatte und Montagefläche gewährleistet sein. Solche Variationen können durch Toleranzen bezüglich der Befestigungsfläche am Maschinenteil bedingt sein. Diesbezüglich sind beispielsweise elastische Dichtmittel, die auch bei einer gewissen Variation des Klebespaltes immer noch ausreichend für den Klebstoff abdichtend wirken, denkbar. Eine besonders große Unempfindlichkeit gegen Klebespaltvariationen erreicht man durch eine Ausnehmung an der Montagefläche oder der Montageplatte, in die die vorstehende Struktur zum Abdichten einsteht. Mit dieser Bauweise können besonders große Toleranzen für die Befestigungsfläche am Maschinenteil zugelassen werden.

Es ist deshalb zu bevorzugen, daß die vorstehende Struktur ein Dichtmittel, beispielsweise ein Metallsteg, eine metallische oder nichtmetallische, insbesondere eine elastomere Dichtung ist.

Eine gute Befestigung für ein solches Dichtmittel ergibt sich, wenn eine Vertiefung vorgesehen ist, in die das Dichtmittel eingelegt ist. Es ist diesbezüglich deshalb bevorzugt, daß die vorstehende Struktur ein in eine Vertiefung eingelegtes Dichtmittel aufweist.

Das Einfüllen des Klebstoffs in den das Klebevolumen bildende Spalt erfolgt von oben her in das Klebvolumen, das in den meisten Fällen als Klebetasche ausgebildet sein wird.

Da für viele mechanische Anwendungen ein Klebespalt mit einem Spaltabstand im Bereich weniger Zehntel Millimeter vorliegt, ist es zweckmäßig, ein Hilfsmittel zum Einfüllen des Klebstoffes vorzusehen, damit das Einfüllen vereinfacht und auch von Hilfspersonal durchgeführt werden kann. Es ist deshalb zu bevorzugen, daß die Montageplatte einen das Klebevolumen von oben speisenden Einfülltrichter aufweist. Idealerweise wirkt dieser Einfülltichter mit einer Einlaufschräge am Bauteil zusammen, so daß durch einfaches Einfüllen die gesamte Klebstoffmenge unmittelbar in das Klebevolumen gelangt.

Die lösbare Befestigung der Montageplatte ermöglicht, wie bereits erwähnt, ein nachträgliches Abnehmen des Bauteils vom Maschinenteil. Diesbezüglich kommt jede form- oder kraftschlüssige Verbindung in Frage. Besonders bevorzugt ist es, daß die Montageplatte bei lösbaren Befestigungen am Maschinenteil außerhalb des Volumens ein oder mehrere Befestigungslöcher aufweist.

Bei Meßsystemen wird in der Regel das Bauteil, z.B. ein Abtastkopf eines Längenmeßsystems, zuerst in eine vorbestimmte Lage justiert und dann am Maschinenteil, beispielsweise eine Maschinenkopf einer Werkzeugmaschine, befestigt. Beim Einstellen der justierten Lage muß natürlich die Dicke der Montageplatte berücksichtigt werden. Es ist diesbezüglich von Vorteil, wenn die Montageplatte während des Einjustierens am Bauteil an der Montagefläche gehalten wird. Gleiches gilt für den Transport eines Bauteils eines Meßsystems bis zur Endmontage. Es ist deshalb bevorzugt, daß das Meßsystem Haltemittel aufweist, die insbesondere als Transportsicherung dienen und mit denen die Montageplatte abnehmbar am Bauteil gehalten ist.

Das Meßsystem kann auf einfach Weise am Maschinenteil angebracht werden, indem zuerst das Bauteil justiert, dann die Montageplatte angebracht und anschließend die Verklebung zwischen Montageplatte und Bauteil vorgenommen wird. Damit ist eine spannungsfreie Montage des Bauteils sichergestellt, wodurch die justierte Lage bei der Endmontage sicher beibehalten bleibt.

Besonders einfach ist dieses Montageverfahren, wenn die Montageplatte bereits bei der Einjustierung des Bauteils an der Montagefläche des Bauteils gehalten ist. Es muß dann lediglich die Montageplatte am Maschinenteil befestigt werden. Der nach Einstellen der justierten Stellung zwischen Montageplatte und Maschinenteil bestehende Spalt wird dadurch zwischen Montageplatte und Montagefläche des Bauteils verlagert, so daß sich der gewünschte Klebespalt für das Klebvolumen beziehungsweise die Klebetasche ergibt.

Die Erfindung wird nachfolgend unter Bezugnahme auf die Zeichnung beispielshalber noch näher erläutert. In der Zeichnungen zeigt:
- Fig. 1: eine schematische Schnittdarstellung eines Maßstabs einer Linear-Meßvorrichtung mit einem schützenden Kapselprofil, wobei die Figur den Zusammenbau veranschaulicht,
- Fig. 2: die zusammengebaute Einheit der Figur 1,
- Fig. 3: den Einbau eines Abtastkopfes in das Kapselprofil der Figur 2,
- Fig. 4 - 7: eine schematische Darstellung der Endmontage eines aus Abtastkopf und Kapselprofil gebildeten Meßsystems an einer Maschine in einzelnen Schritten des Befestigungsverfahrens,
- Fig. 8: eine bei der Endmontage verwendete Montagelehre,
- Fig. 9: eine Schnittdarstellung durch das Meßsystem des in Figur 7 gezeigten Zustandes der Befestigung vor dem letzten Befestigungsschritt,
- Fig. 10: das in Figur 9 gezeigte Meßsystem nach Ausführung der Endmontage,
- Fig. 11: eine perspektivische Darstellung einer Montageplatte, die zur Befestigung des Abtastkopfes verwendet wird,
- Fig. 12: eine perspektivische Darstellung des Abtastkopfes,
- Fig. 13: eine perspektivische Darstellung des Abtastkopfes beim Verbinden mit der Montageplatte und
- Fig. 14: eine perspektivische Darstellung des Meßsystems kurz vor Inbetriebnahme.

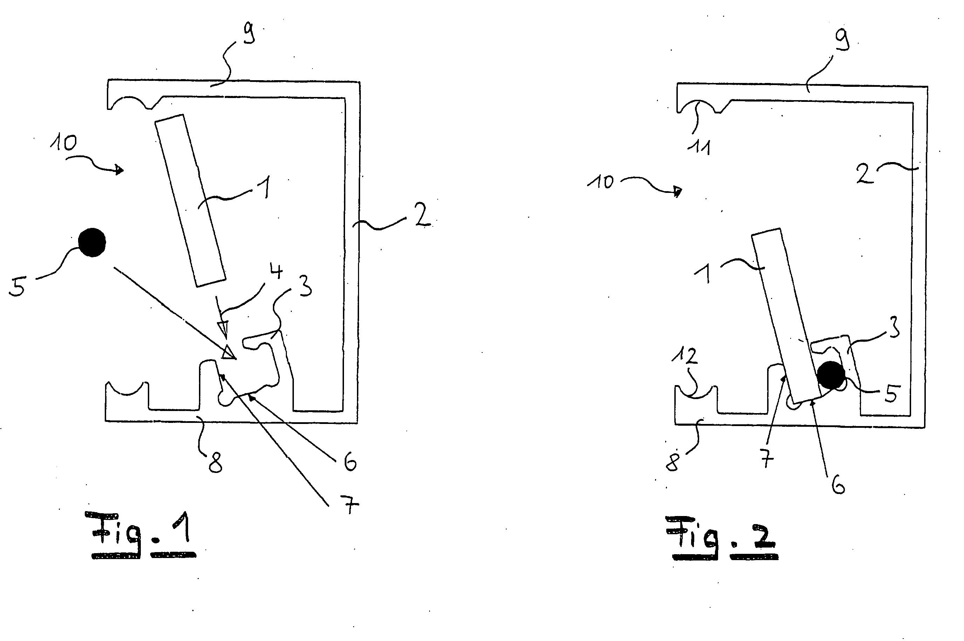

Figur 1 zeigt eine Schnittdarstellung durch einen Maßstab 1 eines Längenmeßsystems, das an einer Werkzeugmaschine zum Einsatz kommt, um die Relativbewegung eines Maschinenkopfes gegenüber einem Maschinenbett zu erfassen. Der Maßstab 1 ist in ein Kapselprofil 2 eingesetzt, das den Maßstabs 1 zum Schutz dreiseitig umgibt.

Im Inneren des Kapselprofils 2 ist zum Befestigen des Maßstabes 1 eine Aufnahme 3 vorgesehen, in die der Maßstab 1 eingesetzt wird (Pfeil 4). In die Aufnahme 3 wird eine Gummischnur 5 eingelegt, die als Spannmittel wirkt, um den Maßstab 1 in der Aufnahme 3 zu sichern. Da der Maßstab 1 im Meßvorgang später abgefühlt wird (er weist dazu eine geeignete Strukturierung auf) und dessen Lage damit für eine genaue Messung wichtig ist, verfügt die Aufnahme 3 über eine untere Referenzfläche 6 sowie eine seitliche Referenzfläche 7, die den Maßstab 1 in exakter Lage im Kapselprofil 2 ausrichten, wenn die als Spannmittel dienende Gummischnur 5 den Maßstab 2 auf die Referenzflächen drückt.

Das Kapselprofil 2 hat U-förmigen Querschnitt mit einer Basis 8 sowie einem Deckel 9. Dadurch, daß das Kapselprofil 2 den Maßstab 1 dreiseitig umgibt, ist ein guter Schutz des empfindlichen Maßstabs 1 gegeben. Die abgefühlte Struktur des Maßstabs 1 liegt an der in der Einbaulage nach unten weisenden Schrägfläche des Maßstabes 1, wodurch Staubablagerungen weiter vermindert werden. Die Basis 8 des Kapselprofils 2 ist zur Befestigung am Maschinenbett einer Werkzeugmaschine ausgebildet.

Figur 2 zeigt den Maßstab 1 in das Kapselprofil 2 eingebaut. Es ist gut zu erkennen, daß der Maßstab 1 im Kapselprofil 2 nur durch eine Öffnung 10 zugänglich ist. Natürlich handelt es sich bei der Öffnung 10 um einen Schlitz, da der Maßstab 1 sich senkrecht zur Zeichenebene erstreckt, ebenso wie das Kapselprofil 2, das beispielsweise aus einem geeignet profilierten Aluminiumstrang hergestellt ist.

Die Schenkel des Kapselprofils 2, d.h. die Basis 8 und der Deckel 9, weisen Haltenuten auf, so daß im Deckel 9 eine obere Haltenut 11 und in der Basis 8 eine untere Haltenut 12 gebildet ist. Diese Haltenuten 11, 12 dienen in Kombination mit einer gewissen Elastizität des Deckels 9 zum Sichern eines in das Kapselprofil eingesetzten Abtastkopfes, was später noch erläutert werden wird.

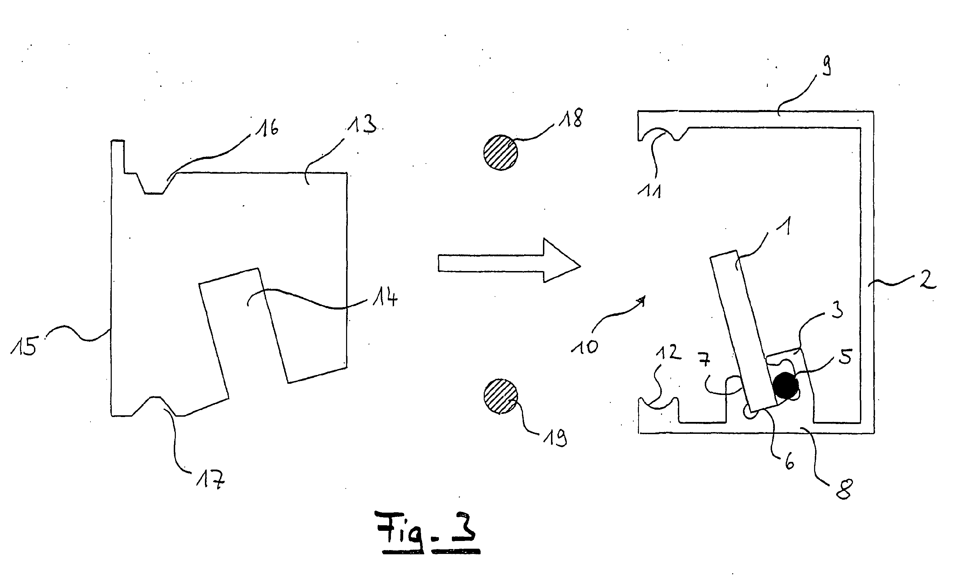

Der Abtastkopf 13 ist in Figur 3 schematisch dargestellt. Er weist einen Meßspalt 14 auf, der im zusammengebauten Zustand den Maßstab 1 dreiseitig berührungslos umgibt und an dem die (nicht dargestellten) Meßmittel angeordnet sind, die die (ebenfalls nicht dargestellte) Struktur am Maßstab 1 kontaktlos abfühlen.

Der Abtastkopf 13 hat eine Montagefläche 15, mit der er am Maschinenkopf der Werkzeugmaschine fest angebracht wird. Weiter verfügt der Abtastkopf 13 über eine obere Nut 16 sowie eine untere Nut 17, die mit den Haltenuten 11 und 12 in den Schenkeln des Kapselprofils 2 so zusammenwirken, daß eine Transportsicherung von zusammengebautem Kapselprofil 2 mit Maßstab 1 und Abtastkopf 13 gewährleistet ist, wobei der Abtastkopf 13 und der Maßstab 1 in vorbestimmter, justierter Stellung zueinander gesichert sind.

Dazu sind ein oberer Paßzylinder 18 und ein unterer Paßzylinder 19 vorgesehen, deren Durchmesser so bemessen ist, daß sie in die obere Haltenut 11 beziehungsweise die untere Haltenut 12 eingelegt durch die federnde Wirkung des Deckels 9 in der Nut 16 bzw. 17 festliegen, wenn der Abtastkopf 13 in das Kapselprofil 1 eingesetzt ist. Die Paßzylinder 18 und 19 können beispielsweise als geeignete Stahldrähte ausgebildet sein.

Der Einsetzvorgang ist in Figur 3 durch einen Pfeil schematisch dargestellt, wobei natürlich nach dem Zusammenbau von Maßstab 1 und Kapselprofil 2 ein Einfädeln des Maßstabes 1 in den Meßspalt 14 des Abtastkopfes 13 durch eine Bewegung senkrecht zur Zeichenebene erfolgt. D.h., der Abtastkopf 13 wird an einem offenen Ende des Kapselprofils 2 über den Maßstab 1 geschoben. Danach wird der Paßzylinder 18 bzw. 19 in den von der oberen Haltenut 11 und der oberen Nut 16 beziehungsweise in den von der unteren Haltenut 12 und der unteren Nut 17 gebildeten Spalt eingeführt. Durch die federnde Wirkung des den Deckel 9 bildenden Schenkels des Kapselprofils 2 werden die Paßzylinder eingeklemmt. Das Kapselprofil 2 hält den Abtastkopf 13 fest zwischen der Basis 8 und dem Deckel 9, und es ist eine vorbestimmte, innerhalb enger, genau bemessener Toleranzen gegebene Orientierung des Abtastkopfes 13 zum Maßstab 1 gegeben.

Die derart vormontierte Einheit aus Abtastkopf 13, Kapselprofil 2 und Maßstab 1 kann dann einfach an der Maschine angebaut werden, indem Abtastkopf 13 und Kapselprofil 2 am Maschinenkopf beziehungsweise Maschinenbett befestigt werden.

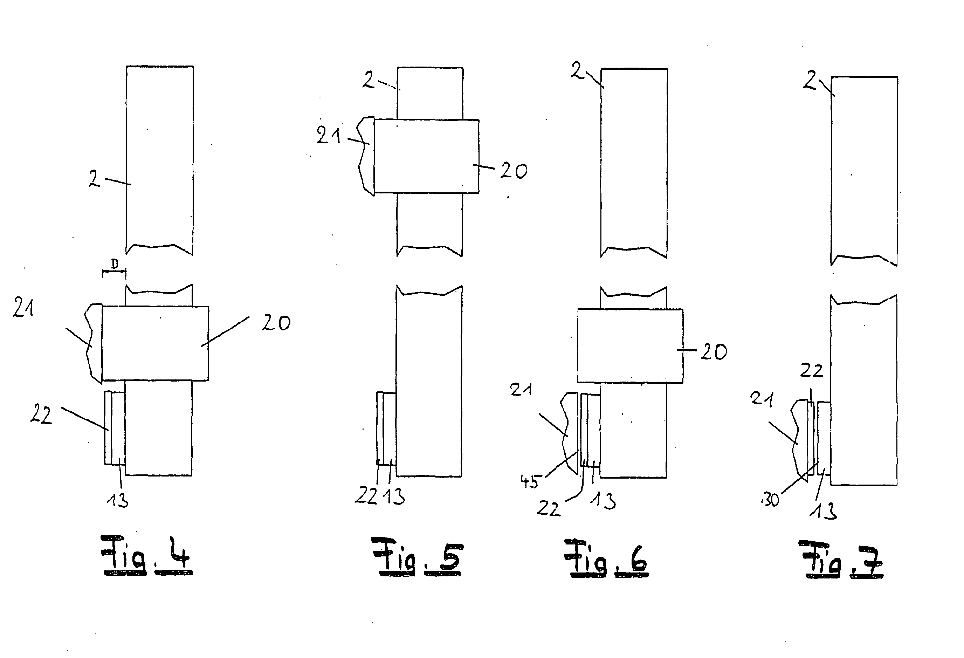

In einer Ausführungsform erfolgt diese Befestigung gemäß den in den Figuren 4 bis 7 dargestellten Schritten. Die Figuren zeigen eine Draufsicht auf die vormontierte Einheit aus Kapselprofil 2, Maßstab 1 und Abtastkopf 13 von oben (bezogen auf Figur 3). Der Abtastkopf 13 ist zur Befestigung an der Montagefläche 15 mit einer Montageplatte 22 versehen, deren Bauweise später noch im Detail erläutert wird. Über die Montageplatte 22 wird der Abtastkopf 13 am Maschinenteil 21 angebracht. Die Montageplatte 22 muß bei der Anbringung des Kapselprofils 2 noch nicht am Abtastkopf 13 vorgesehen sein. Sie wird, wie noch zu erläutern ist, erst für die feste Anbringung des Abtastkopfes 13 am Maschinenkopf 21 benötigt.

Das Kapselprofil 2, in dessen Inneren sich der (in den Figuren 4 bis 7 nicht zu sehen) Maßstab 1 befindet, wird exakt parallel zum Maschinenablauf, d.h. zur Längsbewegung des Maschinenkopfs 1 ausgerichtet. Dazu kommt eine Montagelehre 20 zum Einsatz, die das Kapselprofil 2 in einen vorbestimmten Abstand D zum Maschinenkopf 21 ausrichtet. Durch Bewegen des Maschinenkopfs 21 entlang der Maschinenablaufrichtung wird bei gleichzeitigem Anlegen der Montagelehre 20 eine Justage des Kapselprofils 2 parallel zur Bewegungsrichtung des Maschinenkopfs 21 erreicht. Figur 5 zeigt diesen Vorgang, in dem der Maschinenkopf 21 mit Montagelehre 20 die Ausrichtung des Kapselprofils 2 bewirkt.

Das justierte Kapselprofil 2 wird am Maschinenbett befestigt. Die Befestigung kann auf vielfältige Art und Weise erfolgen. In der hier geschilderten Ausführungsform wird ein zweistufiges Verfahren verwendet, bei dem zuerst eine Grobausrichtung des Kapselprofils 2 zum Maschinenablauf erfolgt. Der Maschinenkopf 21 wird in die entsprechenden (End-)Stellungen bewegt und das Kapselprofil wird an zwei möglichst weit auseinander liegenden Punkten mit der Montagelehre 20 ausgerichtet. Nach dieser Grobausrichtung kann eine erste Fixierung des Kapselprofils 2 erfolgen, beispielsweise indem eine Schraubverbindung locker angezogen wird.

Dann wird der Maschinenkopf 21 mit der Montagelehre 20 langsam entlang des Maschinenablaufes bewegt und gleichzeitig das Kapselprofil 2 fest am (nicht dargestellten) Maschinenbett fixiert. Dies kann in einer Ausführungsform, in der das Kapselprofil 2 verschraubt wird, durch festes Anziehen der Schraubverbindungen erreicht werden. In Ausführungsformen, in denen eine Verklebung des Kapselprofils 2 mit dem Maschinenbett erfolgt, kann die Verklebung schrittweise vorgenommen werden, beispielsweise indem ein geeignetes an der Basis 8 des Kapselprofils 2 angebrachtes Doppelklebeband mit der fortschreitenden Bewegung des Maschinenkopfs 21 von einem Schutzblatt befreit wird, so daß das Kapselprofil 2 fest mit dem Maschinenbett verklebt wird.

Der Abtastkopf 13 mit der daran befestigten Montageplatte 22 ist, wie anhand Figur 3 beschrieben wurde, durch die Paßzylinder 18 und 19 fest mit dem Kapselprofil 2 verbunden. Die Ausrichtung des Kapselprofils 2 parallel zum Ablauf des Maschinenkopfs 21 hat also keinen Einfluß auf die vorjustierte Stellung von Kapselprofil 2 mit Maßstab 1 zu dem Abtastkopf 13.

Ist das Kapselprofil 2 in exakt parallel zum Ablauf des Maschinenkopfs 21 ausgerichteter Stellung am Maschinenbett befestigt (Figur 6), wird der Maschinenkopf 21 zum Abtastkopf 16 gefahren. Es stellt sich dabei zwischen der Montageplatte 22, die an der Montagefläche 15 des Abtastkopfes 13 anliegt, und dem Maschinenkopf 21 ein vorbestimmter Spalt 45 ein. Nun wird die Montageplatte 22, die bislang am Abtastkopf 13 gesichert war, von diesem gelöst und mit dem Maschinenteil 21 verschraubt. Dadurch verlagert sich der Spalt 45, der zuvor zwischen Montageplatte 22 und Maschinenteil 21 bestand, zwischen die Montageplatte 22 und den Abtastkopf 13. Dieser Spalt dient als Klebespalt 30, der dann mit Klebstoff aufgefüllt wird, um den Montagekopf 13 fest an der mit der Montageteil 21 verschraubten Montageplatte 22 anzubringen (vergleiche Figur 7). Der Klebstoff kann dabei spannungsfrei aushärten.

Nach Aushärten des Klebstoffes wird die Verbindung zwischen Montagekopf 13 und Kapselprofil 2 gelöst, indem die Paßzylinder 18 und 19 aus den durch die obere Haltenut 11 und obere Nut 16 sowie untere Haltenut 12 und untere Nut 17 gebildeten Spalten herausgezogen werden.

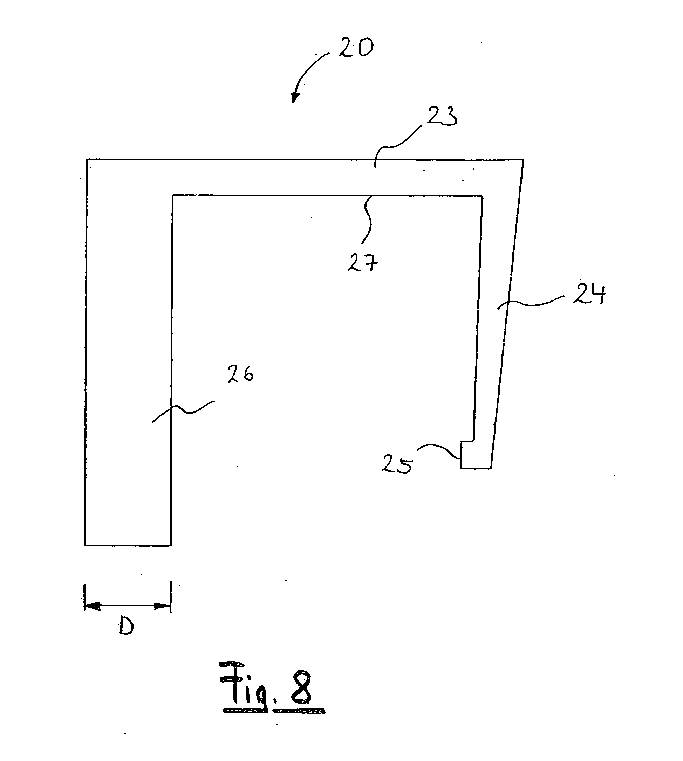

Figur 8 zeigt eine Schnittdarstellung durch die Montagelehre 20. Sie wird über das Kapselprofil 2 gelegt und weist dazu einen ersten Referenzarm sowie einen zweiten Referenzarm 24 auf. Der Referenzarm 24 hat an seiner dem Kapselprofil 2 zugewandten Seite eine Referenzfläche 25, die außen am Kapselprofil 2 etwa auf Höhe des Maßstabes 1 anliegt. Mit einer Auflagefläche 27, die sich an der dem Kapselprofil 1 zugewandten Innenseite des ersten Referenzarmes 23 befindet, liegt die Montagelehre 20 auf dem Deckel 9 des Kapselprofils 2. Ein Einstellarm 26 der Montagelehre 20 sorgt dafür, daß bei auf dem Kapselprofil liegender Montagelehre 20 der gewünschte Abstand D zum Maschinenkopf 21 gegeben ist. Der Einstellarm 26 steht also zwischen den freien Enden des Kapselprofils 2 und dem Maschinenteil 21.

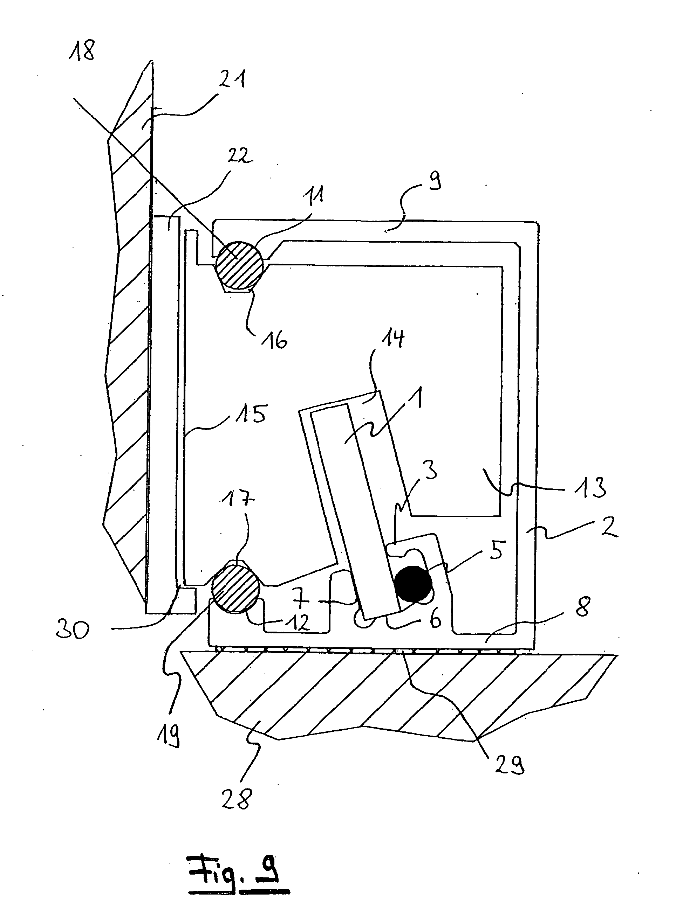

Figur 9 zeigt in einer Schnittdarstellung den Zustand der Befestigung des Meßsystems, wie er in Figur 7 in Draufsicht zu sehen ist. Das Kapselprofil 2 ist dabei mit seiner Basis 8 auf das Maschinenbett 28 geklebt, wozu ein Klebeband 29 mit vorbestimmten Eigenschaften zum Einsatz kommt. Die Montageplatte 22 ist (auf in Figur 9 nicht weiter dargestellte Weise) fest am Maschinenkopf 21 angebracht, wobei das Spaltmaß D, das von der Montagelehre 20 vorgegeben wurde, einen vorbestimmten Klebespalt 30 zwischen der Montagefläche 15 des Abtastkopfes 13 und der Montageplatt 22 bewirkt. Die Montageplatte 22 weist unten einen vorspringenden Randvorsprung auf, der den Klebespalt 30 nach unten begrenzt.

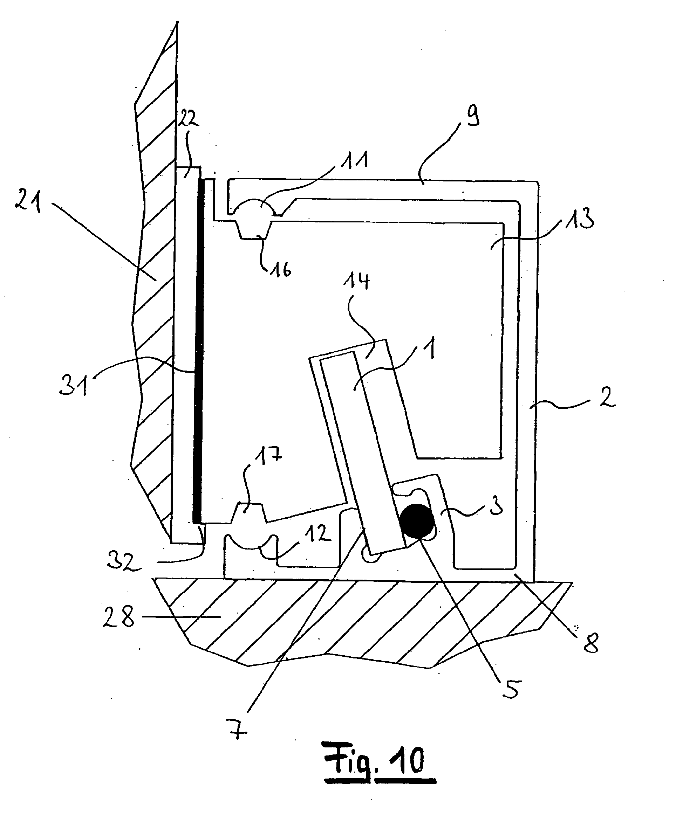

Figur 10 zeigt das Meßsystem nach Abschluß der Montage, wobei das Klebeband 29 zur Vereinfachung nicht dargestellt ist. Der Klebespalt 30 wurde mit Klebstoff 31 aufgefüllt, der wegen des Randvorsprungs 32 an der Unterseite der Montageplatte 22 nicht aus dem Klebespalt 30 herauslaufen konnte. Nach Entnahme des oberen Paßzylinders 18 aus dem Spalt, der von oberer Haltenut 11 und oberer Nut 16 gebildet wurde, sowie des unteren Paßzylinders 19, der aus dem Spalt aus unterer Nut 17 und unterer Haltenut 12 herausgezogen wurde, ist der Abtastkopf 13 frei entlang der (senkrecht zur Zeichenebene liegenden) Ablaufrichtung des Maschinenkopfs 21 bewegbar. Der Abtastkopf 13 steht dabei in das Kapselprofil 2 ein und wird von diesem berührungslos dreiseitig umgeben. Dadurch ist ein guter Schutz des Abtastkopfes 13 gegen Verschmutzung oder mechanische Beschädigung erreicht. Der Abtastkopf 13 umgibt seinerseits dreiseitig den Maßstab 1 und fühlt diesen kontaktlos ab. Durch die Ausrichtung von Kapselprofil 1 und Abtastkopf 13 ist keine Führung des Abtastkopfes 13 im Kapselprofil 2 erforderlich. Der Abtastkopf 13 stützt sich nicht am Kapselprofil 2 oder dem Maßstab 1 ab.

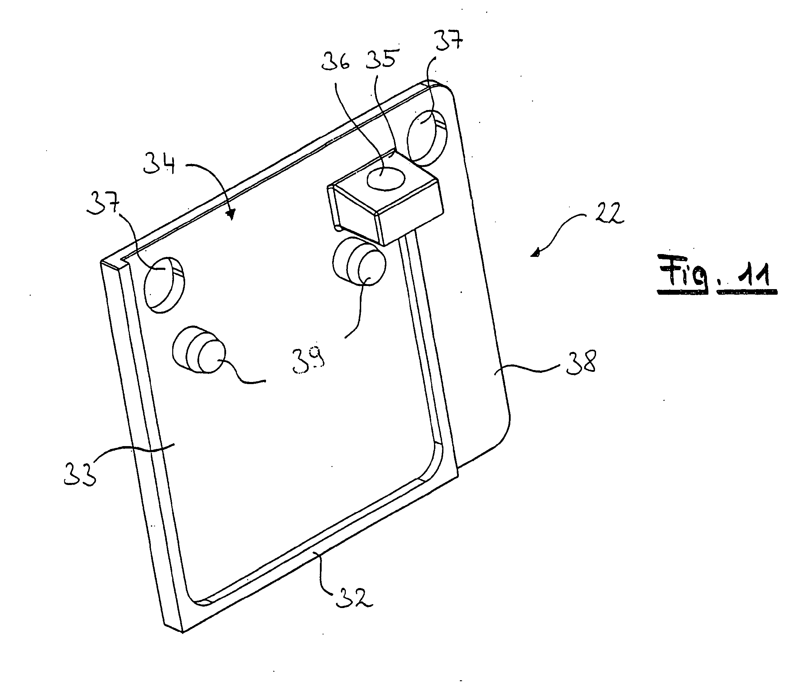

Figur 11 zeigt in perspektivischer Darstellung ein Ausführungsbeispiel für die Montageplatte 22, wobei diejenige Seite im Bild nach rechts weist, an der der Abtastkopf 13 mit der Montagefläche 15 befestigt wird. Die Montageplatte 22 hat einen U-förmig umlaufenden Randvorsprung 32, der als Dichtmittel dient, um ein Herauslaufen des Klebstoffs zu verhindern, der durch eine an der Oberseite zwischen dem Abtastkopf 13 und der Montageplatte 22 gebildete Öffnung 34 eingefüllt wird, um den Abtastkopf 13 an der Montageplatte 22 zu verkleben.

Zum Erleichtern des Einfüllens verfügt die Montageplatte 22 über einen Einfülltrichter 35 mit einer Einfüllöffnung 36, in die aus einer Tülle Klebstoff eingespritzt werden kann. Die Montageplatte 22 hat darüber hinaus zwei Langlöcher 37, die es erlauben, die Montageplatte 22 am Maschinenteil 21 zu verschrauben. Diese Schraubverbindung kann gelöst werden, falls der Abtastkopf 13 nach erfolgter Verklebung wieder vom Maschinenkopf 21 angenommen werden soll. Ohne diese lösbare Verbindung zwischen Montageplatte 22 und Maschinenkopf 21 wäre ein Abnehmen des Abtastkopfes nach erfolgter Verklebung nur sehr aufwendig und mit einer Beschädigungsgefahr für den Maschinenkopf 21 möglich.

Eines der Langlöcher 27 liegt abei in einem Flansch 38, wodurch eine besonders gute Zugänglichkeit auch nach Verklebung des Abtastkopfes 13 erreicht ist. Die Ausbildung der Löcher als Langlöcher 37 hat darüber hinaus den Vorteil, daß bei den entsprechenden Gewindelöcher am Maschinenkopf 21 größere Toleranzen zugelassen werden können, ohne daß Auswirkungen auf die exakte Montage des Abtastkopfes zu befürchten wären.

Um die Montageplatte 22 am Abtastkopf 13 zu sichern, bis die Befestigung der Montageplatte 22 und die anschließende Verklebung des Abtastkopfes 13 abgeschlossen sind, weist die Montageplatte 22 geeignete Haltenasen 39 auf, die in entsprechende Halteöffnungen am Abtastkopf 13 eingreifen. Dadurch kann die Montageplatte 22 auf den Abtastkopf 13 gesteckt werden und ist bis zum Abschluß der Befestigung gegen Herunterfallen gesichert.

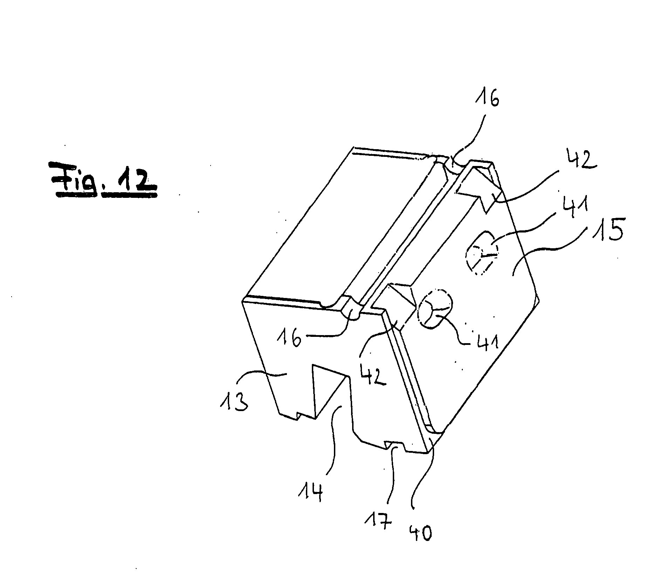

Die Halteöffnungen 42 sind am Abtastkopf 13 in der perspektivischen Darstellung der Figur 12 gut zu erkennen, die den Montagekopf 13 in perspektivischer Darstellung von der Montagefläche 15 her zeigt. Wie zu sehen ist, ist an der Montagefläche 15 eine U-förmige Aussparung 40 vorgesehen, in die der Randvorsprung 32 der Montageplatte 22 einsteht, so daß ein zwischen Montageplatte 22 und Montagefläche 15 gebildete Kleberaum 33, der zur Aufnahme des Klebstoffes 31 dient, unten und seitlich abgedichtet ist. Aufgrund der Viskosität des verwendeten Klebstoffes genügt dabei eine einfache Anlage des Randvorsprunges 32 an der senkrechten Wandfläche, die durch die Aussparung 40 gebildet ist, um die gewünschte Dichtwirkung zu erreichen.

Der Abtastkopf 13 verfügt zum leichteren Einfüllen des Klebstoffs 31 in den Klebraum 33 über Einlaufschrägen 42. Die Einlaufschrägen 42 liegen so, daß in den Einfülltrichter 35 eingefüllter Klebstoff über die Einlaufschräge 42 in den Kleberaum 33 läuft.

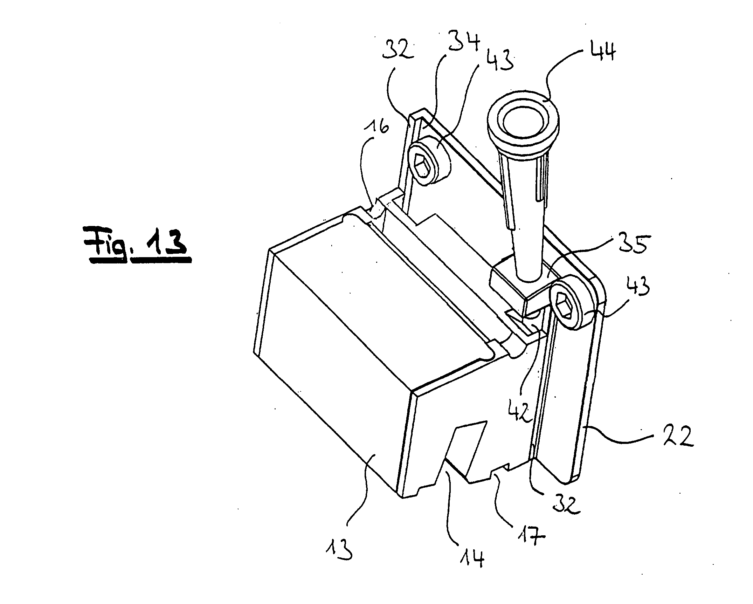

Diesen Vorgang zeigt Figur 13, in der die Montageplatte 22 über Schrauben 42 am (nicht dargestellten) Maschinenteil 21 befestigt dargestellt ist. In den Einfülltrichter 35 ist eine Tülle 44 eingesteckt, die dazu dient, Klebstoff über die Einlaufschräge 42 in den Kleberaum 33 zur Verklebung des Abtastkopfes 13 mit der Montageplatte 22 einzubringen. Der U-förmig umlaufende Rand 32 der Montageplatte 22, der in die Aussparung 40 an der Montagefläche 15 des Abtastkopfes 13 einsteht, ist gewährleistet, daß der eingebrachte Klebstoff nicht aus dem Kleberaum 33 nach unten oder seitlich austreten kann.

In der geschilderten Ausführungsform ist der Abtastkopf 13 während der Verklebung durch das Kapselprofil 2 in der justieren Stellung zum (nicht dargestellten) Maschinenteil 21 gesichert. Das Kapselprofil 2 ist jedoch der besseren Übersichtlichkeit halber in Figur 13 nicht dargestellt.

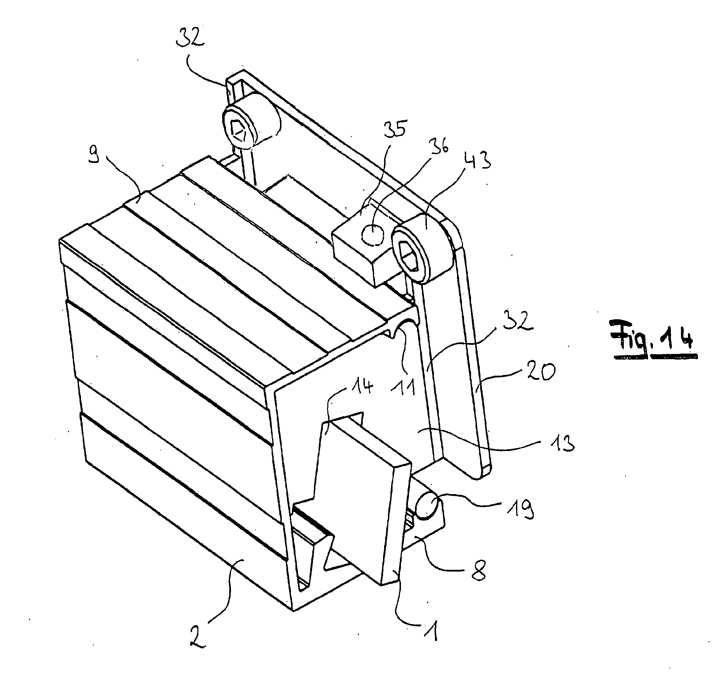

Figur 14 zeigt den Zustand nach der Verklebung kurz vor Abschluß der Endmontage, wobei nun das Kapselprofil 2 samt Maßstab 1 dargestellt ist. Wie zu sehen ist, steht der Abtastkopf 13 tief in das Kapselprofil 2 ein. Der Abtastkopf 14 umgreift den Maßstab 1 dreiseitig, ohne an diesem anzuliegen oder sich abzustützen, wenn die Endmontage abgeschlossen ist, also die Paßstücke abgenommen wurden. Der obere Paßzylinder 18 ist in Figur 14 bereits aus der oberen Haltenut 11 und der (in der Darstellung verdeckten) oberen Nut 16 des Abtastkopfes 13 herausgezogen, der untere Paßzylinder 19 jedoch noch nicht. Nach Entnahme des unteren Paßzylinders 19 aus der unteren Haltenut 12 und der unteren Nut 17 ist der am Maschinenkopf 21 befestigte Abtastkopf 14 frei entlang des Maßstabs 1 beweglich, wobei der Bewegungsverlauf durch die Bewegung des Maschinenkopfs 21 vorgegeben ist. Für den Fall, daß der Abtastkopf 13 vom Maschinenkopf 21 gelöst werden soll, können die Schrauben 43 ausgedreht werden, wodurch der Abtastkopf 13 samt der Montageplatte 22 vom Maschinenkopf 21 abnehmbar ist.

## Patentansprüche

1. Längenmeßsystem zum Messen von Relativbewegungen zwischen einem ersten und einem zweiten Maschinenteil (21, 28), mit einem Abtastkopf (13) und einem davon abgefühlte Maßstab (1), wobei in einer Endmontage des Längenmeßsystems der Abtastkopf (13) fest am ersten Maschinenteil (21) anbringbar und der Maßstab (1) mit dem zweiten Maschinenteil (28) verbindbar ist, der Maßstab (1) in einem Profilteil (2) befestigt ist, das in der Endmontage fest am zweiten Maschinenteil anbringbar ist und in das der Abtastkopf (13) einsteht, wobei das Längenmeßsystem ein entfernbares Montageelement (18, 19) aufweist, das den Abtastkopf (13) in einem zur Endmontage vorbereiteten Zustand vorjustiert und lösbar mit dem Profilteil (2) verbindet, indem es zwei Schenkel des Profilteils (2) mit dem Abtastkopf (13) verbindet, **dadurch gekennzeichnet, daß** das Montageelement zwei Abstandshalter (18, 19) umfaßt, die mittels des Profilteils (2) in Nuten (16, 17) des Abtastkopfes (13) gespannt sind.

2. Längenmeßsystem nach Anspruch 1, **dadurch gekennzeichnet, daß** das Profilteil (2) eine Klebefläche aufweist, an der es mit dem zweiten Maschinenteil (28) verklebbar ist.

3. Längenmeßsystem nach einem der obigen Ansprüche, **dadurch gekennzeichnet, daß** das Profilteil (2) U-förmig mit zwei Schenkeln (8, 9) profiliert ist, wobei einer der Schenkel (8) am zweiten Maschinenteil angebracht ist und an seiner Innenseite den Maßstab (1) trägt und der andere der Schenkel (9) den Abtastkopf (13) während der Messung berührungslos umgreift.

4. Längenmeßsystem nach einem der obigen Ansprüche, **dadurch gekennzeichnet, daß** der Abtastkopf (13) im endmontierten Zustand in das Profilteil (2) einsteht, ohne sich daran abzustützen.

5. Längenmeßsystem nach einem der obigen Ansprüche, **dadurch gekennzeichnet, daß** die Abstandshalter (18, 19) im Querschnitt zylindrisch sind.

6. Längenmeßsystem nach einem der obigen Ansprüche, **dadurch gekennzeichnet, daß** das Profilteil (2) eine den Maßstab (1) ausrichtende Referenzfläche (6, 7) aufweist, an der der Maßstab (1) im befestigten Zustand anliegt.

7. Längenmeßsystem nach Anspruch 6, **gekennzeichnet durch** eine Spannvorrichtung (5), die den Maßstab (1) in Richtung auf die Referenzfläche (6, 7) verspannt.

8. Längenmeßsystem nach einem der obigen Ansprüche, **dadurch gekennzeichnet, daß** der in das Profilteil (2) einstehende Abtastkopf (13) den dort befestigten Maßstab (1) während der Messung dreiseitig und kontaktlos umgreift.

9. Verfahren zur Endmontage eines Längenmeßsystems, **dadurch gekennzeichnet, daß** ein Längenmeßsystem nach Anspruch 1 verwendet wird, zur Endmontage das Profilteil (2) am zweiten Maschinenteil (28) ausgerichtet und befestigt wird, der Abtastkopf (13) am ersten Maschinenteil (21) spaltfüllend (31) fest angebracht wird und dann zum Lösen der Verbindung von Profilteil und Abtastkopf das Montageelement (18, 19) entfernt wird.

10. Verfahren nach Anspruch 9, bei dem das Profilteil (2) zu einer Längsachse der Relativbewegung grob ausgerichtet wird und dann mittels einer Lehre in entlang der Längsachse konstantem Abstand (D) zum ersten Maschinenteil (21) justiert wird, wobei erstes und zweites Maschinenteil (21, 28) zur Einjustierung des konstanten Abstandes gegeneinander bewegt werden.

11. Verfahren nach Anspruch 10, bei dem mit der Lehre ein Abstand (D) eingestellt wird, der einen vorbestimmten Spalt zwischen erstem Maschinenteil (21) und Abtastkopf (13) vor der Anbringung des Abtastkopfes (13) am ersten Maschinenteil (28) zur Folge hat.

12. Verfahren nach einem der Ansprüche 9 bis 11, bei dem der Abtastkopf (13) und/oder das Profilteil (2) auf das jeweilige Maschinenteil (21, 28) geklebt werden.

## Claims

1. A length measuring system for measuring relative movements between a first and a second machine part (21, 28), comprising a scanning head (13) and a scale (1), which is scanned by said scanning head, wherein the scanning head (13) can be fixedly attached to the first machine part (21) in a final assembly of the length measuring system and the scale (1) can be connected to the second machine part (28), the scale (1) is fastened in a profile part (2), which can be fixedly attached on the second machine part in the final assembly and into which the scanning head (13) projects, wherein the length measuring system encompasses a removable assembly element (18, 19), which preadjusts the scanning head (13) in a state, which is prepared for the final assembly, and which connects it to the profile part (2) so as to be capable of being detached, in that it connects two journals of the profile part (2) to the scanning head (13), **characterized in that** the assembly element comprises two space maintainers (18, 19), which are tightened in grooves (16, 17) of the scanning head (13) by means of the profile part (2).

2. The length measuring system according to claim 1, **characterized in that** the profile part (2) encompasses an adhesive surface, at which it can be adhered to the second machine part (28).

3. The length measuring system according to one of the above claims, **characterized in that** the profile part (2) is profiled with two journals (8, 9) in a U-shaped manner, wherein one of the journals (8) is attached to the second machine part and supports the scale (1) on its inner side and the other one of the journals (9) encompasses the scanning head (13) during the measurement in a contact-free manner.

4. The length measuring system according to one of the above claims, **characterized in that** the scanning head (13) projects into the profile part (2) in the finally assembled state, without supporting itself thereon.

5. The length measuring system according to one of the above claims, **characterized in that** the cross section of the space maintainers (18, 19) is cylindrical.

6. The length measuring system according to one of the above claims, **characterized in that** the profile part (2) encompasses a reference surface (6, 7), which orients the scale (1) and on which the scale (1) abuts in the fastened state.

7. The length measuring system according to claim 6, **characterized by** a tightening device (5), which tightens the scale (1) in the direction towards the reference surface (6, 7).

8. The length measuring system according to one of the above claims, **characterized in that** the scanning head (13), which projects into the profile part (2), encloses the scale (1) fastened at that location during the measurement on three sides and in a contact-free manner.

9. A method for finally assembling a length measuring system, **characterized in that** a length measuring system according to claim 1 is used, the profile part (2) being oriented and fastened on the second machine part (28) for the final assembly, the scanning head (13) is fixedly attached to the first machine part (21) so as to fill a gap (31) and the assembly element (18, 19) is then removed for disengaging the connection of profile part and scanning head.

10. The method according to claim 9, in the case of which the profile part (2) is oriented roughly to a longitudinal axis of the relative motion and is then adjusted by means of a gage at a constant distance (D) to the first machine part (21) along the longitudinal axis, wherein first and second machine part (21, 28) are moved for adjusting the constant distance relative to one another.

11. The method according to claim 10, in the case of which a distance (D) is adjusted by means of the gage, which results in a predetermined gap between first machine part (21) and scanning head (13) prior to the attachment of the scanning head (13) on the first machine part (28).

12. The method according to one of claims 9 to 11, in the case of which the scanning head (13) and/or the profile part (2) are adhered to the respective machine part (21, 28).

## Revendications

1. Système de mesure de la longueur, pour mesurer les mouvements relatifs entre une première et une deuxième pièce de machine (21, 28), avec une tête de balayage (13) et une échelle graduée (1), dans lequel la tête de balayage (13) peut être montée serrée sur la première pièce de machine (21) pendant un montage final du système de mesure de la longueur, et l'échelle graduée (1) peut être reliée à la deuxième pièce de machine (28), l'échelle graduée (1) est fixée dans une pièce de profil (2) apte à être montée serrée sur la deuxième pièce de machine pendant le montage final et dans laquelle s'introduit la tête de balayage (13), dans lequel le système de mesure de la longueur comporte un élément de montage amovible (18, 19) permettant de prérégler la tête de balayage (13) dans un état prêt au montage final et de la relier de façon détachable à la pièce de profil (2), en reliant deux branches de la pièce de profil (2) à la tête de balayage (13), **caractérisé en ce que** l'élément de montage comprend deux écarteurs (18, 19) serrés dans des rainures (16, 17) de la tête de balayage (13) au moyen de la pièce de profil (2).

2. Système de mesure de la longueur selon la revendication 1, **caractérisé en ce que** la pièce de profilé (2) comporte une surface de collage, par laquelle elle peut être collée à la deuxième pièce de machine (28).

3. Système de mesure de la longueur selon l'une des revendications précédentes, **caractérisé en ce que** la pièce de profil (2) est profilée en forme de U avec deux branches (8, 9), l'une des deux branches (8) étant montée sur la deuxième pièce de machine et portant l'échelle graduée (1) de son côté intérieur, et l'autre des branches (9) encerclant la tête de balayage (13) sans contact pendant le mesurage.

4. Système de mesure de la longueur selon l'une des revendications précédentes, **caractérisé en ce que** la tête de balayage (13) s'introduit dans la pièce de profil (2) à l'état de montage final, sans s'appuyer dessus.

5. Système de mesure de la longueur selon l'une des revendications précédentes, **caractérisé en ce que** les écarteurs (18, 19) sont cylindriques dans leur section transversale.

6. Système de mesure de la longueur selon l'une des revendications précédentes, **caractérisé en ce que** la pièce de profil (2) comporte une surface de référence (6, 7) pour orienter l'échelle graduée (1), sur laquelle s'applique l'échelle graduée (1) à l'état fixé.

7. Système de mesure de la longueur selon la revendication 6, **caractérisé par** un dispositif de serrage (5) serrant l'échelle graduée (1) dans la direction de la surface de référence (6, 7).

8. Système de mesure de la longueur selon l'une des revendications précédentes, **caractérisé en ce que** la tête de balayage (13) introduite dans la pièce de profil (2) encercle la tête de balayage (1) fixée pendant le mesurage, sur trois côtés et sans contact.

9. Procédé pour le montage final d'un système de mesure de la longueur, **caractérisé en ce que** le système de mesure de la longueur selon la revendication 1 est utilisé, la pièce de profil (2) est orientée et fixée sur la deuxième pièce de machine (28) pour le montage final, la tête de balayage (13) est montée fixement sur la première pièce de machine (21) en remplissant l'espace (31), puis l'élément de montage (18, 19) est éloigné pour défaire la liaison entre la pièce de profil et la tête de balayage.

10. Procédé selon la revendication 9, dans lequel la pièce de profil (2) est orientée grossièrement par rapport à l'axe longitudinal du mouvement relatif, puis ajustée par rapport à la première pièce de machine (21) au moyen d'un gabarit, en respectant un espace constant (D) le long de l'axe longitudinal, les première et deuxième pièces de machine (21, 28) étant déplacées l'une contre l'autre pour l'ajustement de l'espace constant.

11. Procédé selon la revendication 10, dans lequel un espace (D) est réglé avec le gabarit, pour ainsi créer un espacement prédéterminé entre la première pièce de machine (21) et la tête de balayage (13) avant le montage de la tête de balayage (13) sur la première pièce de machine (28).

12. Procédé selon l'une des revendications 9 à 11, dans lequel la tête de balayage (13) et/ou la pièce de profilé (2) sont collées sur chacune des pièces de machine (21, 28).
